# FASCICULE DE BREVET EUROPEEN

(11) **EP 2 825 399 B1**
(45) Date de publication et mention de la délivrance du brevet: **20.04.2016**
(21) Numéro de dépôt: 13710980.7
(22) Date de dépôt: 22.02.2013
(51) Int. Cl.: B60C 11/04, B60C 11/13

(54) **BANDE DE ROULEMENT DE GRANDE ÉPAISSEUR POUR PNEU DE GÉNIE CIVIL**
DICKE LAUFFLÄCHE FÜR REIFEN ZIVILER BAUFAHRZEUGE
THICK TREAD FOR CIVIL ENGINEERING TYRES

(30) Priorité: 15.03.2012 FR 1252368
(43) Date de publication de la demande: 21.01.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CHAUVIN, Dominique, F-63040 Clermont-Ferrand Cedex 9 (FR)
(74) Mandataire: Diernaz, Christian
(86) Numéro de dépôt international: PCT/EP2013/053537
(87) Numéro de publication internationale: WO 2013/135473

(56) Documents cités:
- EP-A1- 1 454 768
- EP-A1- 1 759 890
- FR-A1- 2 961 744
- US-A- 4 320 790

## Description

### DOMAINE DE L'INVENTION

L'invention concerne un pneu pour véhicule de génie civil (type *"off-the-road"* an anglais) dont la bande de roulement a une épaisseur au moins égale à 25 mm. L'invention concerne plus particulièrement un nouveau type de bande de roulement ayant un dessin de sculpture apte à limiter les différences de déformations de cisaillement entre les éléments de sculpture pouvant résulter notamment d'un roulage sur une trajectoire courbe.

Ces différences de déformations de cisaillement peuvent être à l'origine d'une fragilisation des fonds des rainures formant la sculpture de la bande de roulement.

### ETAT DE LA TECHNIQUE

De façon usuelle, un pneu, destiné à équiper un véhicule de génie civil, est pourvu d'une bande de roulement surmontant radialement vers l'extérieur une armature de sommet elle-même surmontant une armature de carcasse. Cette bande de roulement comporte une sculpture formée par des éléments de relief (nervures ou blocs), ces éléments de relief étant délimités par une pluralité de rainures ; en outre, l'épaisseur de cette sculpture est au moins égale à 25 mm et peut aller jusqu'à 110 mm (par épaisseur de sculpture on entend ici la profondeur maximale des rainures).

Les éléments de relief de la bande de roulement ont des faces - dites faces de contact - radialement à l'extérieur de la bande qui sont prévues pour venir en contact avec le sol. Les rainures ont des profondeurs au plus égales à l'épaisseur de la bande et ont des géométries, vues en section, appropriées pour limiter la rétention de cailloux et autres objets présents sur le sol.

Lors d'un roulage sur une trajectoire courbe, on observe une forte mise en extension du matériau composant la bande de roulement, cette extension résultant directement de la mise en dérive du pneu et indirectement de la compression du matériau formant la bande de roulement sous la charge supportée, cette charge générant par effet de Poisson des contraintes d'extension. Compte tenu de la position de chaque rangée circonférentielle par rapport au centre de courbure lors d'un roulage sur une trajectoire courbe, on observe une variation locale des longueurs parcourues par chaque rangée circonférentielle ce qui se traduit par des différences de sollicitations et des cisaillements entre rangées.

Ces écarts de sollicitations et cisaillement sont encore amplifiés par les besoins actuels en matière de pneus pour véhicules génie civil, lesquels conduisent à une augmentation de la capacité de charge portée. Sous ces conditions de fonctionnement, il est demandé de réaliser une amélioration de la performance de traction sur différents sols et dans la mesure du possible une amélioration de la performance en usure (à épaisseur à user donnée, la distance parcourue jusqu'au retrait du pneu augmente).

Pour répondre à ces exigences, il est connu d'augmenter de façon très sensible l'épaisseur de matière à user de la bande de roulement et en conséquence les profondeurs des rainures augmentent en proportion, ce qui augmente les hauteurs des éléments de relief

Lors du passage dans le contact, les éléments de relief sont soumis à des forces de compression et à des efforts tangentiels qui les fléchissent soit dans la direction circonférentielle, soit dans une direction transversale, soit dans une direction oblique. Ces mouvements, d'autant plus importants que les blocs ont des hauteurs importantes, peuvent être à l'origine d'usures localisées rapides ainsi que de cassures de gomme en fond de rainures pouvant conduire alors à des infiltrations d'eau jusqu'aux armatures internes du pneu.

Pour limiter ce phénomène, il est connu de disposer entre les blocs des plates-formes, ces plates-formes ayant pour objectif de limiter le mouvement de flexion des blocs lors du roulage. Ces plates-formes s'étendent sur une partie seulement de la hauteur des blocs afin de conserver au moins à l'état neuf une longueur d'arête la plus grande possible. Un inconvénient de la présence de ces plates-formes est la réduction de volume de rainure disponible ainsi que la réduction de longueur d'arêtes active dès lors que la bande de roulement est usée jusqu'au niveau de ces plates-formes.

L'objet de l'invention est de proposer une solution au problème qui vient d'être présenté, à savoir réaliser une sculpture de bande de roulement pour pneu de véhicule génie civil nécessitant une forte épaisseur de matière à user (c'est-à-dire ayant des rainures dont la profondeur est au moins égale à 25 mm) tout en formant une grande longueur d'arêtes actives à l'état neuf, ces arêtes étant orientées à la fois circonférentiellement et transversalement tout en limitant les effets indésirables résultant des différences de longueurs parcourues dans le contact entre les différentes rangées circonférentielles.

Par arête active à l'état neuf, on entend ici une arête présente sur la surface de roulement de la bande de roulement notamment à l'état neuf.

L'état de la technique connaît des pneus de poids lourd dont l'épaisseur de matière à user est inférieure à 20 mm, donc de moindre épaisseur que les pneus de l'invention. Notamment US-4320790-A décrit une sculpture de bande de roulement de poids lourd comprenant des nervures bord et axialement entre ces nervures de bord une pluralité de rangées de blocs, l'ensemble de ces blocs étant délimités axialement par des rainures circonférentielles zigzagantes. En aucun cas, ce document ne décrit de variante correspondant à l'invention dès lors que la partie entre les nervures épaule est très souple du fait de la présence de multiples rainures circonférentielles et qu'en conséquence l'application à des pneus de fortes épaisseurs (au moins 25 mm) conduirait à une usure accélérée.

Un pneumatique tel que défini dans le préambule de la revendication 1 est divulgué dans EP-A-1759890.

### Définitions :

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSÉ DE L'INVENTION

La présente invention vise à améliorer les performances des pneus pour véhicules de génie civil ayant des bandes de roulement de grande épaisseur (c'est-à-dire dont les rainures ont une profondeur au moins égales à 25 mm) présentant une grande longueur d'arêtes actives à l'état neuf, ces arêtes étant orientées à la fois circonférentiellement et transversalement, ces pneus étant performants en usure et en adhérence et présentant une excellente résistance aux cassures pouvant survenir dans le fond de rainures.

À cet effet, l'invention a pour objet une bande de roulement pour pneu, cette bande en matériau caoutchouc ayant une épaisseur au moins égale à l'épaisseur de matière à user en roulage.

Cette bande comprend deux rainures d'orientation générale circonférentielles de profondeur Pc, ces rainures divisant la bande en une région centrale et deux régions de bord.

La région centrale comprend une pluralité de rainures d'orientation générale transversale, de profondeur Pt et de largeur moyenne Dt, ces rainures transversales et les rainures circonférentielles délimitant sur la rangée centrale une pluralité de blocs, espacés les uns des autres dans la direction circonférentielle. Chaque bloc a des parois latérales et une paroi de contact, cette paroi de contact étant destinée à venir en contact avec le sol en roulage, les parois latérales coupant la paroi de contact selon des arêtes orientées pour certaines dans la direction circonférentielle et pour les autres dans la direction transversale. Chaque bloc de la rangée centrale a une largeur Ltb mesurée selon une direction parallèle aux arêtes transversales et une largeur Lcb mesurée selon la direction circonférentielle. Chaque bloc comprend deux parties d'extrémité faisant face chacune à une nervure bord.

En outre, chaque rangée de bord est formée par une nervure continue ayant une paroi de contact destinée à venir en contact avec le sol en roulage et deux parois latérales espacées d'une distance Ltn correspondant à la largeur maximale de la nervure, l'une de ces parois latérales délimitant une rainure circonférentielle.

La bande selon l'invention est caractérisée en ce que la paroi latérale de chaque nervure de bord comprend une pluralité d'encoches, formant des logements, de largeur transversale Lte et de longueur circonférentielle Lce, chaque encoche étant délimitée sur toute sa hauteur He par des parois d'orientation transversale et une paroi d'orientation circonférentielle, chaque encoche étant géométriquement appropriée pour recevoir au moins une partie d'extrémité d'un bloc de la région centrale avec un jeu circonférentiel Ac (mesuré dans la direction circonférentielle) et un jeux transversal At (mesuré dans la direction transversale ou axiale), ces jeux Ac et At étant déterminés pour assurer, dans les conditions usuelles de roulage du pneu pourvu avec ladite bande, le contact au moins partiel de chaque partie d'extrémité dudit bloc de la région centrale avec des parois d'orientation transversale de l'encoche et ainsi éviter que chacun des blocs, ayant ses extrémités bloquées dans lesdites encoches, ne vienne en contact avec les blocs voisins de la rangée centrale, afin de conserver une capacité de stockage dans chaque rainure transversale lors du passage dans le contact pendant le roulage du pneu.

Par jeu circonférentiel Ac, il faut comprendre ici que ce jeu est présent entre chaque paroi d'orientation transversale de l'encoche et la partie d'extrémité destinée à coopérer avec ladite encoche.

Grâce à l'invention, il est possible de faire travailler dans des conditions favorables des blocs de la région centrale d'une bande de roulement de forte épaisseur, c'est-à-dire d'épaisseur au moins égale à 25 mm de façon à maintenir un espace entre lesdits blocs de la région centrale que ce soit dans des conditions de roulage sous charge en ligne droite ou dans les conditions de roulage en virage. Grâce à ces dispositions, on peut diminuer les effets induits par les différences de longueurs parcourues par les différentes rangées d'une bande de roulement en assurant un blocage des blocs de la rangée centrale par les rangées de bord.

Préférentiellement, les arêtes transversales des blocs de la rangée centrale sont inclinées selon un angle au plus égal à 35 degrés avec l'axe de rotation du pneu pourvu de la bande selon l'invention.

Selon une variante de l'invention et pour améliorer encore le blocage des blocs de la rangée centrale, la longueur Ltp de chaque extrémité de bloc rentrant dans une encoche est au moins égale à 7 % de la longueur transversale totale Lb dudit bloc et encore plus préférentiellement au moins égale à 15% de cette même longueur totale Lb.

Bien entendu, il est tout à fait possible de prévoir que les dimensions des encoches et des parties d'extrémités des blocs qui sont destinées à coopérer avec lesdites encoches sont différentes entre les deux bords du pneu.

Dans une autre variante de l'invention, la longueur de chaque extrémité de bloc rentrant dans une encoche varie avec la profondeur : cette longueur est maximale sur la surface de roulement de la bande de roulement à l'état neuf et diminue avec la profondeur. Préférentiellement, la longueur maximale sur la surface de roulement à l'état neuf est au moins égale à 15% de la longueur transversale totale Lb du bloc.

Pour augmenter encore le blocage des blocs de la rangée centrale sur les nervures de bord, il peut être utile de former, sur les parois délimitant les encoches, des moyens destinés à coopérer avec des moyens prévus sur les parois d'extrémité des blocs de la rangée centrale.

Préférentiellement, la totalité de chaque extrémité des blocs de la rangée centrale est prévue pour coopérer avec une encoche dans une nervure de bord.

Préférentiellement, la dimension transversale Lte des encoches est supérieure d'au moins 30% au jeu At prévu dans la direction transversale.

L'invention est particulièrement utile pour les bandes de roulement ayant de fortes épaisseurs et notamment des épaisseurs comprises entre 25 mm et 110 mm (par épaisseur, on entend la hauteur de matière qui peut être usée).

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue en plan d'une partie de la surface de roulement d'une bande de roulement selon un premier mode de réalisation de l'invention ;
La figure 2 montre une vue locale en perspective de la variante montrée avec la figure 1 dans une configuration initiale ;
La figure 3 montre une vue locale en perspective de la variante montrée avec la figure 1 dans une configuration de roulage ;
La figure 4 montre une vue locale en perspective d'une variante de l'invention.

### DESCRIPTION DES FIGURES

Pour les figures accompagnant cette description, des mêmes signes de référence sont employés pour décrire des variantes de l'invention dès lors que ces signes de référence renvoient à des éléments d'une même nature, que cette nature soit structurelle ou bien fonctionnelle.

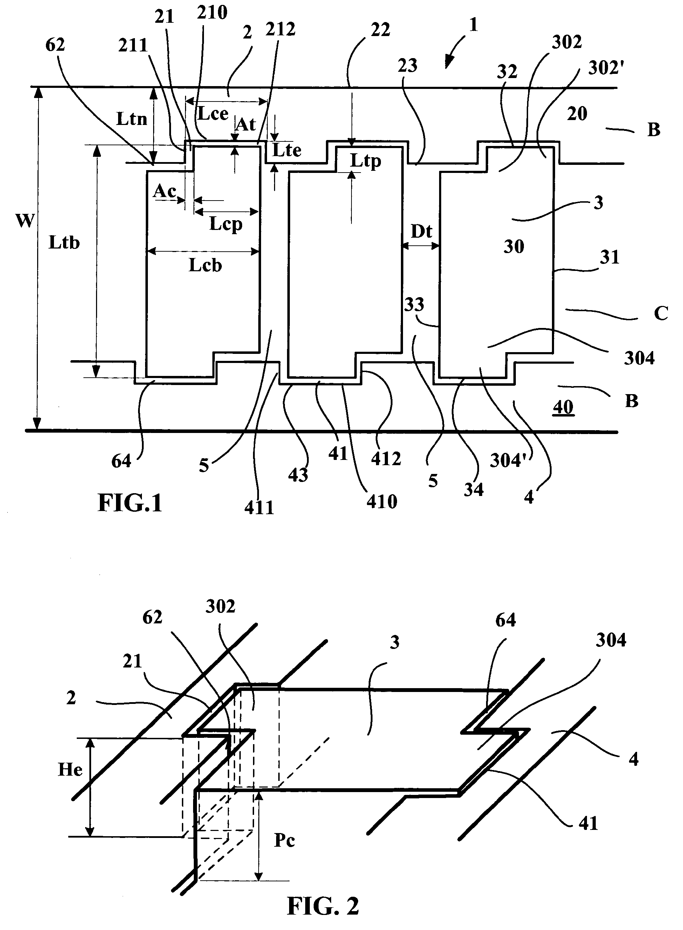

La figure 1 montre une partie d'une surface de roulement d'une bande de roulement 1 d'un pneu de génie civil de dimension **18.00 R 33.** Cette bande de roulement est pourvue d'une sculpture formée par trois rangées circonférentielles, deux rangées de bord B et une rangée centrale C. La bande de roulement a une largeur totale W égale dans le cas présent à 440 mm.

Ces rangées B et C sont séparées par des rainures d'orientation générale circonférentielle 62, 64 de profondeur Pc égale à 70 mm et de largeur moyenne Dc égale à 20 mm.

La rangée centrale C comprend une pluralité de blocs 3 délimités les uns des autres par des rainures transversales 5 de largeur moyenne Dt égale dans le cas présent à 15 mm et de profondeur Pt égale à 70 mm.

Chaque bloc 3 de la région centrale C comprend une face de contact 30 destinée à venir en contact avec le sol lors du roulage et des faces latérales avant et arrière, et des faces latérales d'extrémité. Les faces latérales de chaque bloc coupent la face de contact selon des lignes formant des arêtes transversales 31, 33 et des arêtes circonférentielles 32, 34.

Chaque bloc 3 de la rangée centrale a une largeur transversale maximale Ltb et une largeur circonférentielle Lcb.

Chaque rangée de bord B est formée par une nervure 2, 4 continue circonférentiellement et de largeur Ltn. La nervure 2 située sur le haut de la figure 1 comprend une face de contact 20 et deux faces latérales 22 et 23, cette dernière face latérale 23 délimitant avec les faces latérales des blocs 3 de la rangée centrale C la rainure circonférentielle 62.

En outre, la face latérale 23 de la nervure 2 comprend une pluralité d'encoches 21, en un nombre égal au nombre de blocs 3 de la partie centrale C. Chaque encoche 21 forme un logement destiné à recevoir une partie d'une extrémité latérale 302 d'un bloc 3 de la rangée centrale. Chaque encoche 21 est délimitée par une face circonférentielle 210 de longueur circonférentielle Lce et deux faces transversales 211, 212 de largeur transversale Lte.

Dans le cas présenté, la partie d'extrémité latérale 302 de chaque bloc 3 comprend une partie décalée 302' dans le sens transversal, cette partie décalée 302' étant destinée à être située dans l'encoche 21. Cette partie décalée 302' a des dimensions Lcp et Ltp appropriées pour être dans l'encoche 21 tout en réservant un jeu At dans la direction transversale avec la face circonférentielle délimitant l'encoche et un jeu Ac dans la direction circonférentielle avec chacune des faces transversales délimitant l'encoche. Dans le cas montré, le jeu Ac est le même de part et d'autre de la partie d'extrémité 302', mais il serait tout à fait possible de prévoir des valeurs différentes tout en satisfaisant le but recherché par l'invention. Il est possible de réduire le plus possible ces jeux Ac et At, mais il peut être nécessaire de conserver un volume de drainage nécessitant une valeur non nulle pour ces jeux.

La même construction est réalisée sur l'autre nervure bord 4 à la différence près que les encoches 41 formées sur cette nervure 4 sont décalées circonférentiellement par rapport aux encoches 21 de l'autre nervure 2. Ainsi les parties décalées 302', 304' d'un même bloc 3 prévues pour coopérer avec une encoche 21 sur une nervure 2 et une encoche 41 sur l'autre nervure 4 sont-elles décalées dans la direction circonférentielle dans le but d'obtenir un fonctionnement plus symétrique quelle que soit la direction de roulage. Une partie décalée 304' du bloc 3 est prévue avec les mêmes caractéristiques géométriques pour coopérer avec les parois 411, 412 de l'encoche 41 sur la nervure 4.

Dans la variante présentée avec le support de cette figure 1, les largeurs transversales Ltp des parties décalées 302', 304' des extrémités des blocs 3, prévues pour coopérer avec les encoches, sont égales à 10% de la largeur transversale totale Ltb desdits blocs 3.

La figure 2 montre une vue locale en perspective d'un bloc 3 dans une position sans contrainte. Sur cette figure 2 on peut voir que l'encoche 21 sur la nervure 2 et l'encoche 41 sur la nervure 4 avec lesquelles coopèrent les extrémités latérales 302', 304' du bloc 3 se prolongent de la surface de roulement à l'état neuf jusqu'à une profondeur He qui est égale à la profondeur Pc des rainures circonférentielles 62, 64 séparant le bloc 3 des nervures bord 2, 4.

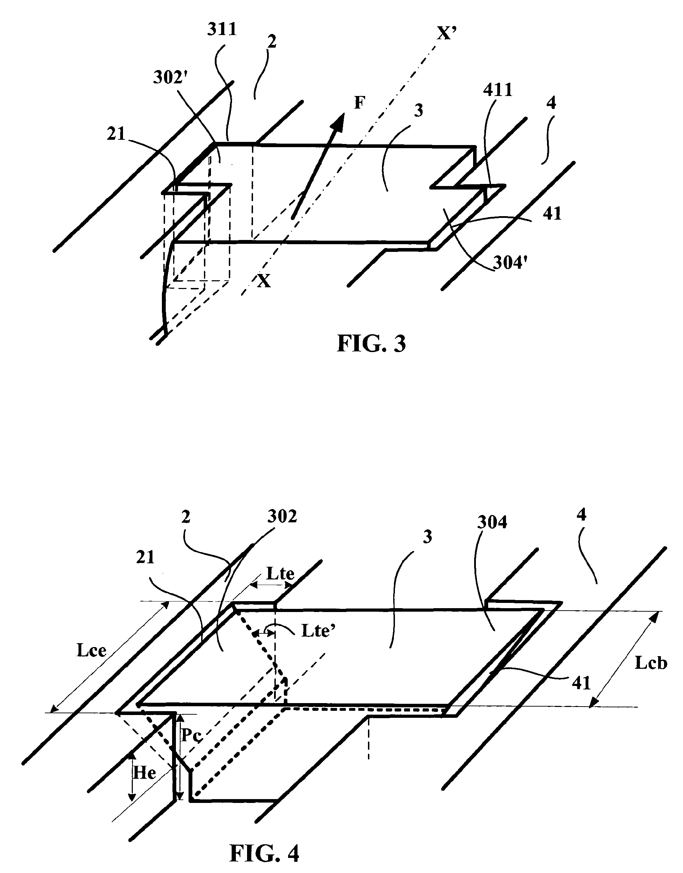

La figure 3 montre la même vue locale en perspective d'un bloc 3 dans une position correspondant à une configuration en roulage. Selon cette configuration, les parties décalées 302', 304' des extrémités latérales du bloc 3 sont en contact avec les faces transversales des encoches 21 et 41 formées dans les nervures 2 et 4. Le jeu circonférentiel Ac étant inférieur à la largeur des rainures transversales 5 entre les blocs 3 de la rangée centrale, la largeur desdites rainures est réduit d'une quantité équivalente mais il est conservé un espace de rainure transversale utile en roulage. Par ailleurs les sollicitations mécaniques en fond de rainures sont réduites par ce fonctionnement. La flèche F indique la direction résultante de la déformation de cisaillement du bloc 3. Cette direction F fait ici un angle non nul avec la direction circonférentielle figurée par la direction XX' et correspond à une trajectoire courbe suivie par le pneu : au moins la partie d'extrémité du bloc se trouvant du côté extérieur au virage vient en butée à la fois sur la face circonférentielle de l'encoche et sur une face transversale de la même encoche.

Dans une variante non montrée, il est possible de combiner la présente invention avec l'ajout de plates-formes formées entre les blocs de la rangée centrale. Notamment ces plates-formes peuvent maintenir un écartement suffisant avec des blocs intercalés entre les blocs coopérant avec des encoches dans les nervures bord, ces blocs intercalés ne coopérant pas avec lesdites nervures de bord par l'intermédiaire de parties d'extrémité venant se bloquer dans des logements formés sur lesdites nervures.

Dans une autre variante montrée avec la figure 4, les encoches 21 et 41 formées dans les nervures 2 et 4 et les parties d'extrémité transversales 302, 304 des blocs 3, destinées à coopérer entre elles, sont formées de manière à avoir des dimensions variables avec le niveau d'usure de la bande. Ainsi, chaque encoche peut avoir des dimensions Lce et Lte sur la surface de roulement à l'état neuf et des dimensions Lte' qui varient continûment pour être égales à zéro à une profondeur He déterminée. Cette profondeur déterminée He peut correspondre par exemple à au moins 50% de la profondeur Pc de la rainure circonférentielle séparant la nervure de bord des blocs de la rangée centrale.

L'intérêt d'une telle variante est de rétablir une nervure de grande surface de contact après une usure partielle en sachant qu'à partir de ce niveau d'usure partielle, les déformation de flexion et cisaillement des blocs dans le contact avec le sol sont réduites puisque les hauteurs des blocs (distance entre la surface de roulement et le fond des rainures) ont diminué et que la rigidité desdits blocs a augmenté.

Dans le cas présenté avec la figure 4, c'est la totalité de la largeur circonférentielle Lcb de chaque extrémité transversale 302, 304 de bloc 3 qui coopère avec une encoche formée dans une nervure épaule.

Dans une autre variante non représentée, l'encoche peut présenter une variation de sa longueur circonférentielle Lce avec le niveau d'usure, cette variation pouvant être combinée avec une variation de la largeur transversale Lte de la même encoche.

Les variantes présentées montrent des blocs dont les arêtes transversales sont parallèles à la direction de l'axe de rotation (ligne verticale sur le dessin). Dans le cas où les blocs présentent des arêtes inclinées par rapport à l'axe de rotation et ce jusqu'à un angle de 35 degrés, les faces transversales des encoches sont formées pour être parallèles aux faces latérales transversales des blocs de la partie centrale. La largeur Lte des encoches est dans ce cas mesurée parallèlement à la direction de l'arête formée par les encoches sur la face de contact 20 de la nervure.

L'invention ayant été décrite de manière générale et au moyen de quelques variantes, il doit être compris que cette invention n'est pas limitée à ces seules variantes décrites et représentées. Il est clair que diverses modifications peuvent y être apportées sans sortir du cadre général de la présente invention.

## Revendications

1. Bande de roulement (1) pour pneu de génie civil ayant une épaisseur de matière à user en roulage comprise entre 25 mm et 110 mm, cette bande comprenant deux rainures d'orientation générale circonférentielle (64) de profondeur Pc la divisant en une région centrale (C) et des régions de bord (B), la région centrale (C) comprenant une pluralité de rainures d'orientation générale transversale (5), de profondeur Pt et de largeur moyenne Dt, les rainures transversales (5) et les rainures circonférentielles (64) délimitant une rangée unique comprenant une pluralité de blocs (3) espacés les uns des autres dans la direction circonférentielle, chaque bloc (3) ayant des parois latérales et une paroi de contact (30) destinée à venir en contact avec le sol en roulage, les parois latérales coupant la paroi de contact selon des arêtes orientées pour certaines dans la direction circonférentielle (32, 34) et pour les autres dans la direction transversale (31, 33), chaque bloc (3) de la rangée centrale ayant une largeur Ltb mesurée selon une direction parallèle aux arêtes transversales (31, 33), et une largeur Lcb mesurée selon la direction circonférentielle, la bande selon l'invention étant **caractérisée en ce que** chaque rangée de bord (B) est formée par une nervure continue (2, 4) ayant une paroi de contact (20, 40) destinée à venir en contact avec le sol en roulage et deux parois latérales espacées d'une distance Ltn correspondant à la largeur maximale de la nervure, chacune de ces parois latérales (23, 43) délimitant avec les blocs (3) une rainure circonférentielle (64, 65), et la paroi latérale (23, 43) de chaque nervure (2, 4) de bord comprend une pluralité d'encoches (21, 41) de largeur transversale Lte et de longueur circonférentielle Lce, chaque encoche (21, 41) étant délimitée sur toute sa hauteur He par des parois d'orientation transversale (211, 212, 411, 412) et une paroi d'orientation circonférentielle (210, 410), chaque encoche (21, 41) étant géométriquement appropriée pour recevoir au moins une partie d'extrémité (302', 304') d'un bloc (3) de la région centrale (C) avec un jeu circonférentiel Ac - mesuré dans la direction circonférentielle - et un jeux transversal At - mesuré dans la direction transversale ou axiale-, ces jeux Ac et At étant déterminés pour assurer, dans les conditions usuelles de roulage du pneu pourvu avec ladite bande, le contact au moins partiel de la partie d'extrémité (302, 304) dudit bloc (3) de la région centrale avec l'une au moins des parois d'orientation transversale (211, 212, 411, 412) de l'encoche (21, 41) et ainsi éviter que chacun des blocs (3), ayant ses extrémités bloquées dans lesdites encoches (21, 41), ne vienne en contact avec les blocs (3) voisins de la rangée centrale (C).

2. Bande de roulement selon la revendication 1 **caractérisée en ce que** la longueur Ltp de chaque extrémité (302', 304') de bloc (3) rentrant dans une encoche (21, 41) est au moins égale à 7 % de la longueur transversale totale Lb dudit bloc.

3. Bande de roulement selon la revendication 1 **caractérisée en ce que** la longueur Ltp de chaque extrémité (302', 304') de bloc (3) rentrant dans une encoche (21, 41) est au moins égale à 15% de la longueur transversale totale Lb dudit bloc.

4. Bande de roulement selon l'une des revendications 1 à 3 **caractérisée en ce que** la longueur Ltp de chaque extrémité (302', 304') de bloc (3) rentrant dans une encoche (21, 41) varie avec la profondeur et **en ce que** cette longueur Ltp est maximale sur la surface de roulement de la bande de roulement à l'état neuf et diminue avec la profondeur.

5. Bande de roulement selon la revendication 4 **caractérisée en ce que** la longueur Ltp de chaque extrémité (302', 304') de bloc (3) rentrant dans une encoche (21, 41) mesurée sur la surface de roulement à l'état neuf est au moins égale à 15% de la longueur transversale totale Lb du bloc.

6. Bande de roulement selon l'une des revendications 1 à 5 **caractérisée en ce que** les arêtes transversales (31, 33) des blocs (3) de la rangée centrale sont inclinées selon un angle au plus égal à 35 degrés avec l'axe de rotation.

7. Bande de roulement selon l'une des revendications 1 à 6 **caractérisée en ce que** la dimension transversale Lte de chaque encoche (21, 41) est supérieure d'au moins 30% au jeu At mesuré dans la direction transversale entre une extrémité de bloc et l'une des paroi transversale de ladite encoche.

## Patentansprüche

1. Lauffläche (1) für Reifen ziviler Baufahrzeuge mit einer im Einsatz zu verschleißenden Materialdicke, welche zwischen 25 mm und 110 mm liegt, wobei diese Fläche zwei allgemein umfängliche Orientierungsrillen (64) von einer Tiefe Pc aufweist, welche sie in einen zentralen Bereich (C) und Randbereiche (B) unterteilt, wobei der zentrale Bereich (C) eine Vielzahl von allgemein quer verlaufenden Rillen (5) mit einer Tiefe Pt und mittlerer Breite Dt aufweist, wobei die quer verlaufenden Rillen (5) und die umfänglichen Rillen (64) eine einzige Reihe abgrenzt, welche eine Vielzahl von in der Umfangsrichtung voneinander beabstandeten Blöcken (3) aufweist, wobei jeder Block (3) Seitenwände und eine Kontaktwand (30) besitzt, welche dafür vorgesehen ist, mit dem Fahrboden in Kontakt zu kommen, wobei die Seitenwände die Kontaktwand gemäß Rändern schneiden, welche für die einen in der Umfangsrichtung (32, 34) und für die anderen in der Querrichtung (31, 33) orientiert sind, wobei jeder Block (3) der zentralen Reihe eine Breite Ltb, welche gemäß einer zu den quer verlaufenden Rändern (31, 33) parallelen Richtung gemessen wird, und eine Breite Lcb besitzt, welche gemäß der Umfangsrichtung gemessen wird, wobei die Fläche gemäß der Erfindung **dadurch gekennzeichnet ist, dass** jede Randreihe (B) von einer kontinuierlichen Rippe (2, 4) gebildet wird, die eine Kontaktwand (20, 40), welche dafür vorgesehen ist, mit dem Fahrboden in Kontakt zu kommen, und zwei Seitenwände besitzt, welche mit einem Abstand Ltn beabstandet sind, welcher der maximalen Breite der Rippe entspricht, wobei jede dieser Seitenwände (23, 43) mit den Blöcken (3) eine umfängliche Rille (64, 65) abgrenzt, und die Seitenwand (23, 43) jeder Seitenrippe (2, 4) eine Vielzahl von Aussparungen (21, 41) mit quer verlaufender Breite Lte und umfänglicher Länge Lce aufweist, wobei jede Aussparung (21, 41) über ihre gesamte Höhe He von quer verlaufenden Orientierungswänden (211, 212, 411, 412) und einer umfänglichen Orientierungswand (210, 410) begrenzt wird, wobei jede Aussparung (21, 41) geometrisch geeignet ist, um mindestens einen Endabschnitt (302', 304') eines Blocks (3) des zentralen Bereichs (C) mit einem umfänglichen Spiel Ac - gemessen in Umfangsrichtung - und einem quer verlaufenden Spiel At - gemessen in quer verlaufender oder axialer Richtung -, wobei diese Spiele Ac und At festgelegt werden, um unter üblichen Einsatzbedingungen des mit dieser Fläche versehenen Reifens den zumindest teilweisen Kontakt des Endabschnitts (302, 304) des Blocks (3) des zentralen Bereichs mit mindestens einer der quer laufenden Orientierungswände (211, 212, 411, 412) der Ausnehmung (21, 41) zu gewährleisten und so zu vermeiden, dass jeder der Blöcke (3), dessen Enden in den Ausnehmungen (21, 41) blockiert sind, mit den benachbarten Blöcken (3) der zentralen Reihe (C) in Kontakt kommt.

2. Lauffläche nach Anspruch 1, **dadurch gekennzeichnet, dass** die Länge Ltp eines jeden Endes (302', 304') eines Blocks (3), welches in eine Ausnehmung (21, 41) hineinragt, mindestens gleich 7% der gesamten quer verlaufenden Länge Lb des Blocks ist.

3. Lauffläche nach Anspruch 1, **dadurch gekennzeichnet, dass** die Länge Ltp eines jeden Endes (302', 304') eines Blocks (3), welches in eine Ausnehmung (21, 41) hineinragt, mindestens gleich 15% der gesamten quer verlaufenden Länge Lb des Blocks ist.

4. Lauffläche nach einem der Ansprüche 1 bis 3, **dadurch gekennzeichnet, dass** die Länge Ltp eines jeden Endes (302', 304') eines Blocks (3), welches in eine Ausnehmung (21, 41) hineinragt, mit der Tiefe variiert und dass diese Länge Ltp auf der Lauf-Oberfläche der Lauffläche in neuem Zustand maximal ist und mit der Tiefe abnimmt.

5. Lauffläche nach Anspruch 4, **dadurch gekennzeichnet, dass** die Länge Ltp eines jeden Endes (302', 304') eines Blocks (3), welches in eine Ausnehmung (21, 41) hineinragt, welche auf der Lauf-Oberfläche in neuem Zustand gemessen wird, mindestens gleich 15% der gesamten quer laufenden Länge Lb des Blocks ist.

6. Lauffläche nach einem der Ansprüche 1 bis 5, **dadurch gekennzeichnet, dass** die quer verlaufenden Ränder (31, 33) der Blöcke (3) der zentralen Reihe gemäß einem Winkel von mindestens 35 Grad zur Drehachse geneigt sind.

7. Lauffläche nach einem der Ansprüche 1 bis 6, **dadurch gekennzeichnet, dass** die quer verlaufende Abmessung Lte einer jeden Aussparung (21, 41) um mindestens 30% größer als das in Querrichtung zwischen einem Blockende und der einen Querwand der Ausnehmung gemessene Spiel At ist.

## Claims

1. Tread (1) for a civil engineering tyre, having a thickness of material wearable during running in the range from 25 mm to 110 mm, this tread comprising two generally circumferentially orientated grooves (64) having a depth Pc dividing it into a central region (C) and edge regions (B), the central region (C) comprising a plurality of generally transversely orientated grooves (5), having a depth Pt and a mean width Dt, the transverse ribs (5) and the circumferential ribs (64) delimiting a single row comprising a plurality of blocks (3) spaced apart from one another in the circumferential direction, each block (3) having lateral walls and a contact wall (30) intended to come into contact with the ground during running, the lateral walls cutting the contact wall along edges, some of which are orientated in the circumferential direction (32, 34) while the others are orientated in the transverse direction (31, 33), each block (3) of the central row having a width Ltb measured in a direction parallel to the transverse edges (31, 33) and a width Lcb measured in the circumferential direction, the tread according to the invention being **characterized in that** each edge row (B)is formed by a continuous rib (2, 4) having a contact wall (20, 40) intended to come into contact with the ground during running and two lateral walls spaced apart at a distance Ltn corresponding to the maximum width of the rib, each of these lateral walls (23, 43) delimiting with the blocks (3) a circumferential groove (64, 65), and the lateral wall (23, 43) of each edge rib (2, 4) comprises a plurality of recesses (21, 41) with a transverse width Lte and a circumferential length Lce, each recess (21, 41) being delimited over the whole of its height He by transversely orientated walls (211, 212, 411, 412) and a circumferentially orientated wall (210, 410), each recess (21, 41) having a suitable geometry to receive at least an end part (302', 304') of a block (3) of the central region (C) with a circumferential clearance Ac, measured in the circumferential direction, and a transverse clearance At, measured in the transverse or axial direction, these clearances Ac and At being determined so as to ensure that, in the usual running conditions of the tyre provided with said tread, each end part (302, 304) of said block (3) of the central region is at least partially in contact with transversely orientated walls (211, 212, 411, 412) of the recess (21, 41), in such a way that each of the blocks (3), having its ends locked in said recesses (21, 41), is prevented from coming into contact with the neighbouring blocks (3) of the central row (C).

2. Tread according to Claim 1, **characterized in that** the length Ltp of each end (302', 304') of a block (3) entering a recess (21, 41) is at least equal to 7% of the total transverse length Lb of said block.

3. Tread according to Claim 1, **characterized in that** the length Ltp of each end (302', 304') of a block (3) entering a recess (21, 41) is at least equal to 15% of the total transverse length Lb of said block.

4. Tread according to any of Claims 1 to 3, **characterized in that** the length Ltp of each end (302', 304') of a block (3) entering a recess (21, 41) varies with the depth, and **in that** this length Ltp is maximal on the rolling surface of the tread in the new state, and decreases with the depth.

5. Tread according to Claim 4, **characterized in that** the length Ltp of each end (302', 304') of a block (3) entering a recess (21, 41) measured on the rolling surface in the new state is at least equal to 15% of the total transverse length Lb of said block.

6. Tread according to any of Claims 1 to 5, **characterized in that** the transverse edges (31, 33) of the blocks (3) of the central row are inclined at an angle of not more than 35 degrees to the axis of rotation.

7. Tread according to any of Claims 1 to 6, **characterized in that** transverse dimension Lte of each recess (21, 41) is at least 30% greater than the clearance At measured in the transverse direction between one end of a block and one of the transverse walls of said recess.
